# EUROPEAN PATENT SPECIFICATION

(11) **EP 1 932 874 B1**
(45) Date of publication and mention of the grant of the patent: **27.02.2013**
(21) Application number: 06797020.2
(22) Date of filing: 30.08.2006
(51) Int. Cl.: C08J 7/00, C08J 7/12, B29D 11/00

(54) **METHOD FOR PRODUCING CONTACT LENS MATERIAL AND METHOD FOR PRODUCING SOFT CONTACT LENS**
VERFAHREN ZUR HERSTELLUNG VON KONTAKTLINSENMATERIAL UND VERFAHREN ZUR HERSTELLUNG EINER WEICHEN KONTAKTLINSE
PROCÉDÉ DE PRODUCTION DE MATÉRIEL DE LENTILLE DE CONTACT ET DE PRODUCTION D UNE LENTILLE DE CONTACTE SOUPLE

(30) Priority: 05.09.2005 JP 2005256647
(43) Date of publication of application: 18.06.2008
(73) Proprietor: Hoya Corporation, Tokyo 161-8525 (JP)
(72) Inventor: IMAFUKU, Suguru, Tokyo 169-8661 (JP)
(74) Representative: von Kreisler Selting Werner
(86) International application number: PCT/JP2006/317045
(87) International publication number: WO 2007/029573

(56) References cited:
- JP-A- 57 002 021
- JP-A- 61 141 705
- JP-A- 2003 500 508
- CHUNG-PENG HO ET AL: "Ultrathin coating of plasma polymer of methane applied on the surface of silicone contact lenses", JOURNAL OF BIOMEDICAL MATERIALS RESEARCH, vol. 22, 1 January 1988 (1988-01-01), pages 919-937, XP55008396,

## Description

### TECHNICAL FIELD

The present invention relates to a method of manufacturing a contact lens material having a smooth surface with good water wettability and durability, and to a method of manufacturing a soft contact lens employing the contact lens material obtained by the above method.

### TECHNICAL BACKGROUND

Clinical results have indicated that the supply of oxygen from the atmosphere diminishes when wearing contact lenses, resulting in the inhibition of corneal epithelial cell mitosis and thickening of the cornea. Accordingly, attempts have been made to improve the oxygen permeability of materials to provide safer contact lenses.

Water-containing soft contact lenses are known to produce a pleasant wear comfort due to the flexibility of the material, but the oxygen permeability they afford is lower than that of hard contact lenses due to the moisture content of the lenses. For example, in the case of water-containing soft contact lenses, the oxygen permeation coefficient of a material with an 80 percent water content is about 40 x 10⁻¹¹ (cm²/s) · (mLO₂/mL x mmHg); an adequate amount of oxygen does not reach the cornea. For such reasons, soft contact lenses having lens components in the form of silicone-containing monomers and siloxane macromers to increase oxygen permeability and contact lenses having lens components in the form of fluorine-containing monomers to prevent contamination have been proposed. For example, Japanese Unexamined Patent Publication (KOKAI) No. 2001-311917 discloses a soft contact lens material having good flexibility and oxygen permeability employing a macromer having a dimethylsiloxane structure in a side chain. However, employing silicon components and fluorine components in lens materials generally tends to decrease the water wettability of the lens surface. As a result, contaminants in lacrimal fluid components tend to adhere, sometimes compromising wear comfort.

Under such a situation, various surface treatment methods have been proposed for contact lenses to enhance the water wettability of the surface. Japanese Examined Patent Publication (KOKOKU) Showa No. 63-040293 discloses a treatment method in which coating of silicone or polyurethane lenses is conducted under a hydrocarbon atmosphere essentially not comprising nitrogen or oxygen, after which the lenses are exposed to oxygen, thereby increasing the hydrophilic property of the lens surface. In such a coating method, a silicone hydrogel lens is treated with plasma while not containing water. However, to obtain the final lens product, after treating the lens with plasma, an organic solvent such as alcohol is employed to remove unpolymerized monomers, oligomers, and the like the retention of which in the lens is biologically undesirable. A physiological saline, soft contact lens storage solution (packing solution), or the like is then substituted, followed by high-pressure steam sterilization processing. In such steps of extraction with an organic solvent such as alcohol or the like and water introduction using physiological saline or a soft contact lens storage solution, the volume of the lens swells by about 10 to 50 percent. Thus, since the coating film is a rigid film with an extremely high crosslinking density that is formed in a hydrocarbon atmosphere, there is a problem in that the polymer film separates, forming cracks in the lens surface. The defect level of separation and cracking of the film caused by the extraction and swelling steps is exacerbated by the subsequent high-pressure steam sterilization treatment, rendering the lens unsuitable for use as a contact lens worn in direct contact with the eye.

Japanese Unexamined Patent Publication (KOKAI) Showa No. 62-031803 discloses a plasma treatment method with a mixed gas of a saturated hydrocarbon and oxygen. However, in plasma polymerization with a mixed gas of saturated hydrocarbon and oxygen, the polymer film that is formed by the plasma is etched away more rapidly than the film formed on the lens due to etching effect attributed by oxygen plasma. Thus, considerable time is required to achieve a desired film thickness, which is problematic for the commercialization of this method.

"Application of plasma polymerization on silicone rubber contact lens surfaces and its effects" in Collected Articles on Polymers (Vol. 42, No. 11, pp. 841-847, 1985) describes a polymer film with good water wettability and durability employing N-vinyl-2-pyrrolidone ("NVP" hereinafter) monomer. This method permits the formation of a polymer film with good water wettability and durability. However, the NVP employed in the coating is a known carcinogen when in a vapor state. When employing organic monomers such as NVP as gases in plasma processing, great care must be exercised for the safety of workers and at worksites. Thus, this method also presents problems for commercialization.

### DISCLOSURE OF THE INVENTION

Accordingly, the object of the present invention is to provide a contact lens material having a smooth surface with good water wettability and durability such that, after coating the lens surface while the lens contains no water, an extraction step with an organic solvent such as alcohol, a water introduction step employing physiological saline or a soft contact lens storage solution, and a high-pressure steam sterilization step, the film that is formed on the lens surface is able to withstand volumetric swelling of the lens and the surface of the lens does not have deficiencies that become problems when the lens is worn, as well as having surface water wettability and durability adequate for wearing.

The present invention relates to a method of manufacturing a contact lens material comprising a contact lens base material and a coating formed on at least a portion of a surface of said base material, wherein
said contact lens base material is processed by plasma polymerization in a mixed gas atmosphere of methane and moist air, and then treated with plasma in a nonpolymerizable gas atmosphere to form said coating.
Furthermore, the present invention relates to a method of manufacturing a soft contact lens, wherein
water is introduced into the contact lens material manufactured by the above method to obtain a soft contact lens.

The present invention can provide a soft contact lens having a smooth surface possessing good water wettability and durability, and more particularly, a soft contact lens comprised of hydrogel that contains silicone as a lens component.

### BEST MODE FOR CARRYING OUT THE INVENTION

The present invention will be described in greater detail below.

### [Method of manufacturing contact lens material]

The present invention relates to a method of manufacturing a contact lens material comprising a contact lens base material and a coating formed on at least a portion of a surface of said base material. In the method of manufacturing a contact lens material of the present invention, said contact lens base material is processed by plasma polymerization in a mixed gas atmosphere of methane and moist air, and then treated with plasma in a nonpolymerizable gas atmosphere to form said coating.

The aforementioned contact lens base material can be a polymer capable of becoming a hydrogel, preferably a silicone-containing copolymer capable of becoming a hydrogel, having the shape of a contact lens. Base materials that are commonly known as those for soft contact lens may be employed. Specific examples of such contact lens base materials are base materials comprised of copolymers obtained by polymerizing a mixture of at least one silicone-containing monomer, or silicone-containing macromonomer, and at least one hydrophilic monomer. An example of an applicable silicone monomer is tris(trimethylsiloxy)- *gamma*-methacryloxypropylsilane. One example of a silicone-containing macromonomer is a siloxane macromonomer having a number average molecular weight of about 1,000 to 10,000 with a polysiloxane structure in a side chain, such as that shown in General Formula (I) below. 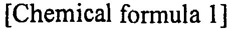 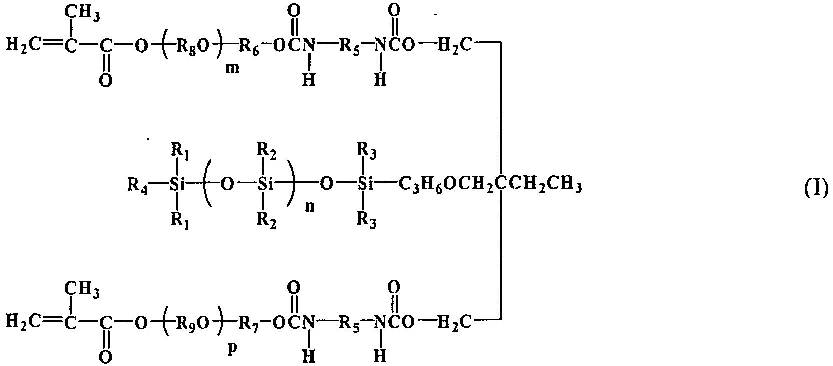 [In the formula, R₁, R₂ and R₃ are each independently selected from C1 to C4 alkyl groups, R₄ is selected from C 1 to C6 alkyl groups, R₅ is a residue in in which NCO is removed from an aliphatic, alicyclic or aromatic diisocyanate, R₆, R₇, R₈ and R₉ are each independently selected from C1 to C3 alkylene, n is an integer of 4 to 80, and m and p are each independently an integer of 3 to 40.]
Examples of hydrophilic monomers are 2-hydroxyethyl methacrylate, N,N-dimethylacrylamide, N-vinyl-2-pyrrolidone, and methacrylic acid. Japanese Unexamined Patent Publication (KOKAI) No. 2001-311917, Published Japanese Translation of a PCT International Application (TOKUHYO) Heisei No. 10-509763, Japanese Unexamined Patent Publication (KOKAI) No. 2003-228029, Published Japanese Translation of a PCT International Application (TOKUHYO) Heisei No. 11-502894, and the like can be referred to for details regarding contact lens base materials that are suitable for use in the present invention.

The contact lens base material can be manufactured by various conventional techniques (such as lathe cutting, spin casting, and cast molding manufacturing methods), in the cast molding manufacturing method, the lens is removed from the mold, and then processed to form a coating (processed by plasma polymerization under a mixed gas atmosphere and treated with plasma under a nonpolymerizable gas atmosphere as set forth above).

In the present invention, the coating is formed on at least a portion of the surface of the contact lens base material. The coating is formed by processing the contact lens base material by plasma polymerization in a mixed gas atmosphere of methane and moist air (referred to as "first step", hereinafter), followed by plasma treatment in a nonpolymerizable gas atmosphere (referred to as "second step", hereinafter). In the present invention, the term "processing by plasma polymerization" refers to generating a plasma state by an electrical discharge in a suitable degree of vacuum in a plasma polymerization device and forming a thin film (polymer film) formed with polymerizable gas on the surface of the base material, and "treatment with plasma" refers to modification of the outermost layer of the surface of the base material with a nonpolymerizable gas.

### FIRST STEP

In the first step, the contact lens base material is processed by plasma polymerization in a mixed gas atmosphere of methane and moist air. Specifically, the contact lens base material is introduced into a plasma polymerization device and a vacuum is generated to bring the arrival pressure within the device to below a certain range. When the contact lens base material is conveyed into a vacuum device and a vacuum is drawn, in addition to gas adsorbing to the surface of the device, occluded gas on the interior, and gas that is discharged through seal materials, gas, moisture and the like that are adsorbed to the contact lens base material being processed is discharged. Thus, keeping the arrival pressure in the device constant prior to processing by plasma polymerization also contributes to reducing the variation in quality between processing lots and within lots, and is desirable from both practical and commercial perspectives. The arrival pressure when drawing a vacuum is preferably equal to or less than 1.35 Pa, more preferably equal to or less than 1.30 Pa. Equal to or less than 1.35 Pa is preferable because the variation in quality (the variation in coating thickness) between processing lots and within lots can be reduced due to the effects of gas adsorbed on the surface of the device and gas adsorbed to the contact lens base material, as mentioned above. To discharge gas within the device to within a certain range in this manner, it suffices to employ a vacuum pump having the ability to reach the targeted degree of vacuum; a hydraulic rotation pump, dry pump, or any commonly known pump may be employed. Any measuring apparatus capable of measuring the pressure within the prescribed range may be employed to measure the degree of vacuum within the device; examples are diaphragm vacuum gages and Pirani vacuum gages. Further, in the present invention, to uniformly and efficiently process the surfaces (front curved surface and base curved surface) of the contact lens base material being processed, the contact lens base material is preferably placed on a tray for support. Since the interior of the device is in a state of near vacuum, it is desirable to support the contact lens base material through linear contact, such as contact of equal to or greater than 1 percent, with the surface of the contact lens base material to increase the stability of the contact lens base material during processing. Any material that is commonly employed in vacuum devices, such as stainless steel, may be employed as the tray material.

Once the degree of vacuum within the device has reached the prescribed pressure range, a mixed gas of methane and moist air is introduced into the device, and a base for a coating that is flexible, able to withstand swelling of the lens, and possesses good water wettability and durability is formed on the surface of the lens. The use of moist air in the first step results in a coating film having flexibility on the surface of the lens, and permits the formation of a smooth surface such that cracks and the like do not form in the coating film on the lens surface even after extraction with an organic solvent such as alcohol (referred to as "alcohol extraction", hereinafter) or a water introduction step employing physiological saline or the like. In the present invention, the term "moist air" refers to air containing equal to or greater than 150 ppm of moisture, 150 to 1,000 ppm is preferable, and 150 to 400 ppm is of even greater preference. In this process, moisture content of less than 150 ppm in dry air is undesirable because the crosslinking density in the film formed on the surface of the lens increases, tending to form a rigid film, and cracks and the like tend to develop in swelling steps such as alcohol extraction. Examples of moist air preparation methods are: mixing moisture as an impurity during dry air manufacturing; mixing moisture by causing dry air to pass through distilled water when introducing dry air into the device; and boiling distilled water in a glass container such as a flask with a rounded bottom, for example, mixing the steam that is obtained with dry air, and then introducing the mixture into the device.

The mixing ratio of methane to moist air (methane:moist air) employed in the first step is preferably from 50:50 to 70:30 based on volume. A proportion of moist air exceeding this ratio is undesirable because the rate of film formation on the surface of the lens tends to decrease (the processing time increases) and the water wettability following high-pressure steam sterilization that is carried out prior to obtaining the final product sometimes decreases. A proportion of methane exceeding this ratio is undesirable as a film formed on a flexible soft contact lens because the film that is formed on the surface of the lens tends to become rigid, and separation, cracking, and the like of the rigid polymer film occur due to size change caused by swelling. The mixing ratio is more preferably from 55:45 to 65:35.

In the first step, a mixed gas of methane and moist air can be introduced into the device, or the methane and moist air can be separately introduced to form a mixed gas within the device. In the first step, it is desirable for the gas to be supplied without interruption to the interior of the device, with processing by plasma polymerization being conducted while using a vacuum pump to maintain a constant pressure within the device. The flow rate of the mixed gas of methane and moist air that is introduced into the device is preferably 1.5 to 20 sccm, more preferably 2 to 10 sccm, for a device with an internal volume of about 150 to 700 L, for example.

The processing by plasma polymerization in the first step is desirably conducted after the gas has been introduced into the device and the pressure within the device has been stabilized. The processing conditions during electrical discharge are suitably selected; for example, a pressure within the device of 4 to 10 Pa, a discharge output of 10 to 80 W, and a power source with low frequency of about 6 to 15 kHz during plasma generation are desirable. Internal electrode-type and external electrode-type devices may be employed, for example. In all cases, known devices may be employed to carried out. The duration of the processing by plasma polymerization in the first step can be set taking into account the desired thickness of the film, and may be, for example, 3 to 20 minutes, preferably 4 to 10 minutes.

### SECOND STEP

In the second step, to the contact lens base material following the aforementioned first step, plasma treatment is conducted in a nonpolymerizable gas atmosphere. In the present invention, the hydrophilic property of the coating can be enhanced by conducting the second step after forming a coating base on the surface of the contact lens base material in the first step. The nonpolymerizable gas employed in the second step has an etching effect, functioning to increase the hydrophilic property of the coating by etching the coating that has been formed on the lens base material in the first step. The second step can be conducted with the same plasma device as the first step, or with a different plasma device. From the perspective of workability and the like, it is desirable to successively conduct the second step following the first step in the same plasma device. In that case, once the processing gas in the device has been discharged following the first step, the nonpolymerizable gas employed in the second step is introduced. In the first step, in the case of a silicone hydrogel, it is possible to increase the water wettability, for example, to the extent that the contact angle of 105 degree in unprocessed state becomes about 50 to 60 degree, in the contact angle measurement by a liquid-drop method employing distilled water. The second step can impart a greater hydrophilic property to the lens surface, and it is possible to increase the contact angle to about 40 degree, in the aforementioned case.

The "nonpolymerizable gas" employed in the second step refers to a gas not having the property of depositing on the surface by plasma processing. Such gases can be broadly divided into those that do not contribute to chemical reactions, such as inert gases, and those that contribute to chemical reactions but do not have the property of depositing on the surface. Specific examples are helium, argon, H₂, O₂, N₂, H₂O, NH₃, and air. Of these, oxygen, argon, and air are preferred, and oxygen is of even greater preference. The "air" referred to here can be moist air. The moist air described in the first step above can be employed.

In the second step as well, it is desirable to conduct the plasma treatment while introducing the gas into the device without interruption and using a vacuum pump to maintain a constant pressure within the device. A pressure within the plasma device of 4 to 10 Pa, a discharge output of 10 to 80 W, and a power source with low frequency of about 6 to 15 kHz during plasma generation are desirable. When the internal volume of the plasma device is about 150 to 700 L, the flow rate of the nonpolymerizable gas is preferably 1.5 to 20 sccm, more preferably 2 to 10 sccm. The duration of the plasma processing in the second step can be set taking into account the etching rate and the like of the processing gas employed in the second step; for example, it can be set 30 seconds to 5 minutes, and preferably 1 to 3 minutes.

A coating can be formed on the surface of the contact lens base material by the above steps. It suffices for the coating to be formed on at least a portion of the surface of the base material, but it is desirably formed over the entire surface of the base material. The thickness of the coating is important with regard to the water wettability and durability of the lens surface. The thickness of the coating can be measured with an automatic ellipsometer. Instead of directly measuring the thickness of the coating formed on the contact lens base material with an automatic ellipsometer, it is also possible to place both the lens and a silicon wafer on the conveyor tray, measure the thickness of the film that is formed on the silicon wafer, and adopt this film thickness as the thickness of the coating that has been formed on the contact lens base material. The thickness is preferably 90 to 250 Angstroms, more preferably 100 to 200 Angstroms. A coating thickness of equal to or greater than 90 Angstroms is preferable because it affords high coating heat resistance and does not result in a decrease in water wettability following high-pressure steam sterilization. A coating thickness of equal to or less than 250 Angstroms yields high oxygen permeability.

### [Method of manufacturing soft contact lens]

The method of manufacturing a soft contact lens of the present invention is the method wherein water is introduced into the contact lens material manufactured by the aforementioned method to obtain a soft contact lens.
The water introduction can be conducted by a known method. Specifically, the contact lens material obtained by the aforementioned method can be immersed in physiological saline or a soft contact lens storage solution to introduce water.

Following processing to introduce water, the soft contact lens can be sterilized by processing with high-pressure steam, for example. The contact lens material can also be subjected to the extraction treatment with an organic solvent prior to the water introduction treatment. This extraction treatment can be conducted by known methods; such treatment can remove unpolymerized monomers, oligomers, and the like remaining in the contact lens material that are biologically undesirable. Since there is a highly flexible coating on the surface of the contact lens material that is obtained by the method of the present invention, it is possible to reduce or prevent separation, cracking and the like of the coating during the above-described extraction treatment and water introduction treatment. Thus, according to the present invention, a soft contact lens of good water wettability and durability in addition to high surface smoothness can be obtained.

### EXAMPLES

The present invention will be further described below based on examples. However, the present invention is not limited to the following examples.

### 1. Manufacturing contact lens base material

### Manufacturing Example A: Synthesis of macromer

To a three-necked flask were charged 8.88 g of isophorone diisocyanate, 0.025 g of a catalyst in the form of dibutyltin dilaurate, and 45 mL of methylene chloride and the mixture was stirred under a nitrogen gas flow. Next, 20 g of *alpha*-butyl-*omega*-[3-(2,2-(dihydroxymethyl)butoxy)propyl]polydimethylsiloxane was precisely weighed out and added dropwise to the flask over about three hours, and the mixture was reacted. When the reaction had progressed for 48 hours at room temperature, another 0.025 g of dibutyltin dilaurate and 23.3 g of polyethylene glycol monomethacrylate (PE-350) were precisely weighed out and added dropwise to the flask over about 30 minutes. The mixture was covered with aluminum foil and stirred until the absorption band (2,260 cm⁻¹) corresponding to the isocyanate in IR (infrared radiation absorption spectra) analysis disappeared (a reaction of about 48 hours at room temperature). Methylene chloride was further added to the solution, after which the mixture was washed with a large quantity of water, dehydrated, and filtered. The solvent was then distilled off, yielding a macromer with a number average molecular weight of 2,000 (based on polystyrene conversion).

### Manufacturing Example A-1: Manufacturing contact lens base material

About 3.9 g of the siloxane macromonomer obtained in Manufacturing Example A, about 15 g of tris(trimethylsiloxy)-*gamma*-methacryloxypropylsilane, about 11.1 g of N,N-dimethylacrylamide, about 0.003 g of a coloring material in the form of 1-anilino-4-(4-vinylbenzyl)aminoanthraquinone, and about 0.18 g of a polymerization initiator in the form of phenylbis(2,4,6-trimethylbenzoyl)phosphineoxide were mixed for about 20 hours at room temperature to prepare a mixed monomer solution. The mixed monomer solution was then placed in a contact lens-shaped casting mold comprised of polypropylene, the upper and lower molds were combined, and polymerization was completed by irradiation for 20 minutes with radiation in the UV to visible light (380 to 450 nm) at about 35 mW/cm². When polymerization had ended, the polymerization product was removed from the mold, yielding a contact lens base material.

### Manufacturing Example A-2: Manufacturing contact lens

About 4.5 g of the siloxane macromonomer obtained in Manufacturing Example A, about 15 g of tris(trimethylsiloxy)-*gamma-*methacryloxypropylsilane, about 10.5 g of N,N-dimethylacrylamide, and about 0.18 g of phenylbis(2,4,6-trimethylbenzoyl)phosphineoxide were mixed for about 20 hours at room temperature to prepare a mixed monomer solution. The mixed monomer solution was then placed in a contact lens-shaped casting mold comprised of polypropylene, the upper and lower molds were combined, and polymerization was completed by irradiation for 20 minutes with radiation in the UV to visible light (380 to 450 nm) at about 35 mW/cm². When polymerization had ended, the polymerization product was removed from the mold, yielding a contact lens base material.

### Example 1

The contact lens obtained in Manufacturing Example A-1 was placed in a plasma polymerization device (with an internal volume of about 170 L) and a vacuum was drawn to an arrival pressure of 1.24 Pa. Next, a mixed gas of methane and moist air (moisture concentration 150 ppm) with a mixing ratio (methane:moist air) of 60:40 (gas flow rate: methane = 1.8 (sccm), moist air = 1.2 (sccm)) was introduced into the device and processing by plasma polymerization was conducted for 6 minutes at a pressure of 4 Pa, a frequency of 10 kHz, and a discharge power of 40 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 200 Angstroms with an automatic ellipsometer.

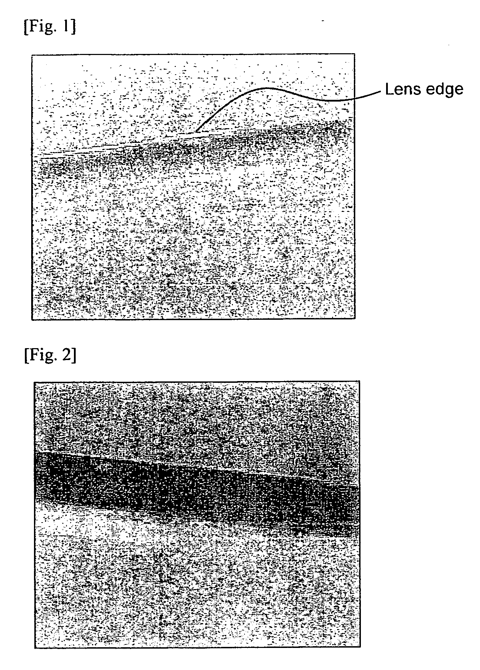

Following processing, the lens was immersed for about 5 hours in methanol, replaced with a soft contact lens filler solution, packed into a lens shipping case, and subjected to high-pressure steam sterilization processing at 121°C for 30 minutes. The following methods were employed to observe the surface of the lens obtained and evaluate it for water wettability (contact angle measurement) and the durability (scrubbing durability) of the hydrophilic film on the surface. The results are given in Table 1. As shown in Table 1, the lens obtained in the present example had a smooth, soft surface (Fig. 1), good water wettability and durability, and adequate physical properties as a soft contact lens.

### (a) Inspection of external appearance

After wiping moisture off the surface of the lens, a VH-8000 digital HF microscope made by Keyence Corp. was used to examine the surface of the lens for scratches and cracks.

### (b) Evaluation of surface water wettability (contact angle measurement)

After wiping moisture off the surface of the lens, the lens was attached on a support and the contact angle was measured by the liquid-drop method with distilled water.

### (c) Scrubbing durability test

The lens was placed in the palm of the hand, a soft contact lens cleaning solution was employed to scrub the front and back sides of the lens, and the lens was thoroughly rinsed with distilled water. This cleaning cycle was repeated, and the method described in (b) was then used to measure the contact angle after 10, 20, and 30 cleaning cycles to evaluate the durability of the hydrophilic film on the surface.

### Example 2

The contact lens obtained in Manufacturing Example A-1 was placed in a plasma polymerization device (with an internal volume of about 170 L) and a vacuum was drawn to an arrival pressure of 1.24 Pa. Next, a mixed gas of methane and moist air (moisture concentration 150 ppm) with a mixing ratio (methane:moist air) of 60:40 (gas flow rate: methane = 1.8 (sccm), moist air = 1.2 (sccm)) was introduced into the device and processing by plasma polymerization was conducted for 5 minutes at a pressure of 4 Pa, a frequency of 10 kHz, and a discharge power of 40 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 170 Angstroms with an automatic ellipsometer. Subsequent processing and evaluation of the lens after processing were conducted in the same manner as in Example 1. The evaluation results for the lens are given in Table 1. The lens had a smooth, soft surface (Fig. 2), good water wettability and durability, and adequate physical properties as a soft contact lens.

### Example 3

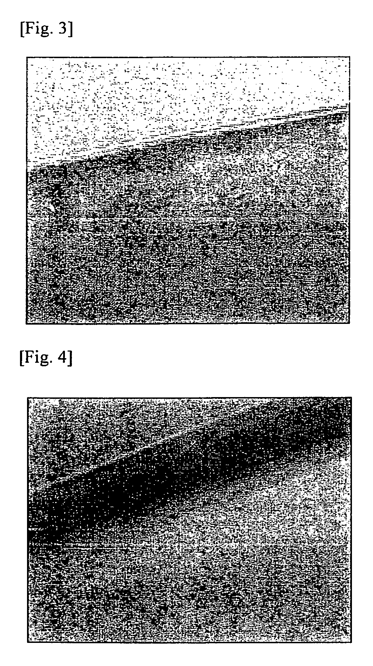

The contact lens obtained in Manufacturing Example A-1 was placed in a plasma polymerization device (with an internal volume of about 170 L) and a vacuum was drawn to an arrival pressure of 1.28 Pa. Next, a mixed gas of methane and moist air (moisture concentration 150 ppm) with a mixing ratio (methane:moist air) of 60:40 (gas flow rate: methane = 1.8 (sccm), moist air = 1.2 (sccm)) was introduced into the device and processing by plasma polymerization was conducted for 4.5 minutes at a pressure of 4 Pa, a frequency of 10 kHz, and a discharge power of 40 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 150 Angstroms with an automatic ellipsometer. Subsequent processing and evaluation of the lens after processing were conducted in the same manner as in Example 1. The evaluation results for the lens are given in Table 1. The lens had a smooth, soft surface (Fig. 3), good water wettability and durability, and adequate physical properties as a soft contact lens.

### Example 4

The contact lens obtained in Manufacturing Example A-2 was placed in a plasma polymerization device (with an internal volume of about 170 L) and a vacuum was drawn to an arrival pressure of about 1.25 Pa. Next, a mixed gas of methane and moist air (moisture concentration 250 ppm) with a mixing ratio (methane:moist air) of 67:33 (gas flow rate: methane = 2 (sccm), moist air = 1 (sccm)) was introduced into the device and processing by plasma polymerization was conducted for 6 minutes at a pressure of 4 Pa, a frequency of 15 kHz, and a discharge power of 44 W. Next, once the processing gas had been discharged from the device, 3 (sccm) of oxygen was introduced into the device and plasma treatment was conducted for 1 minute at a pressure of 4 Pa, a frequency of 15 kHz, and a discharge power of 44 W. The thickness of a film formed on a silicon wafer processed together with the lens was measured at about 220 Angstroms with an automatic ellipsometer. Subsequent processing and evaluation of the lens after processing were conducted in the same manner as in Example 1. The evaluation results for the lens are given in Table 1. The lens had a smooth, soft surface, good water wettability and durability, and thus it was adequately sufficient as a soft contact lens.

### Example 5

The contact lens obtained in Manufacturing Example A-1 was placed in a plasma polymerization device (with an internal volume of about 170 L) and a vacuum was drawn to an arrival pressure of about 1.24 Pa. Next, a mixed gas of methane and moist air (moisture concentration 300 ppm) with a mixing ratio (methane:moist air) of 60:40 (gas flow rate: methane = 1.8 (sccm), moist air = 1.2 (sccm)) was introduced into the device and processing by plasma polymerization was conducted for 6 minutes at a pressure of 4 Pa, a frequency of 10 kHz, and a discharge power of 40 W,. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 190 Angstroms with an automatic ellipsometer. Subsequent processing and evaluation of the lens after processing were conducted in the same manner as in Example 1. The evaluation results for the lens are given in Table 1. The lens had a smooth, soft surface (Fig. 4), good water wettability and durability, and adequate physical properties as a soft contact lens.

### Example 6

The contact lens obtained in Manufacturing Example A-1 was placed in a plasma polymerization device (with an internal volume of about 170 L) and a vacuum was drawn to an arrival pressure of about 1.24 Pa. Next, a mixed gas of methane and moist air (moisture concentration 300 ppm) with a mixing ratio (methane:moist air) of 60:40 (gas flow rate: methane = 1.8 (sccm), moist air = 1.2 (sccm)) was introduced into the device and processing by plasma polymerization was conducted for 4 minutes at a pressure of 4 Pa, a frequency of 10 kHz, and a discharge power of 40 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 120 Angstroms with an automatic ellipsometer. Subsequent processing and evaluation of the lens after processing were conducted in the same manner as in Example 1. The evaluation results for the lens are given in Table 1. The lens had a smooth, soft surface, good water wettability and durability, and adequate physical properties as a soft contact lens.

### Example 7

The contact lens obtained in Manufacturing Example A-1 was placed in a plasma polymerization device (with an internal volume of about 170 L) and a vacuum was drawn to an arrival pressure of about 1.24 Pa. Next, a mixed gas of methane and moist air (moisture concentration 300 ppm) with a mixing ratio (methane:moist air) of 53:47 (gas flow rate: methane = 1.6 (sccm), moist air = 1.4 (sccm)) was introduced into the device and processing by plasma polymerization was conducted for 4.5 minutes at a pressure of 4 Pa, a frequency of 10 kHz, and a discharge power of 40 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 100 Angstroms with an automatic ellipsometer. Subsequent processing and evaluation of the lens after processing were conducted in the same manner as in Example 1. The evaluation results for the lens are given in Table 1. The lens had a smooth, soft surface, good water wettability and durability, and adequate physical properties as a soft contact lens.

### Comparative Example 1 (Processing with hydrocarbon alone)

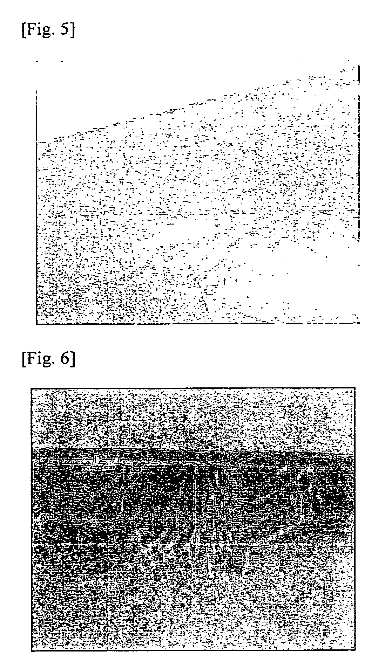

The contact lens obtained in Manufacturing Example A-2 was placed in a plasma polymerization device (with an internal volume of about 170 L) and a vacuum was drawn to an arrival pressure of about 1.23 Pa. Next, 3 (sccm) of methane was introduced into the device and processing by plasma polymerization was conducted for 6 minutes at a pressure of 4 Pa, a frequency of 10 kHz, and a discharge power of 45 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 45 W. The thickness of a film formed on a silicon wafer processed together with the lens was measured at about 200 Angstroms with an automatic ellipsometer. Subsequent processing and evaluation of the lens after processing were conducted in the same manner as in Example 1. The evaluation results for the lens are given in Table 1. Observation of the lens surface revealed cracks, rendering the lens unsuitable as a contact lens (Fig. 5). It was thought that the film formed with methane was formed as a rigid coating on the lens, and the coating was unable to withstand the degree of swelling of the lens in the alcohol extraction and water introduction steps, resulting in cracks.

### Comparative Example 2 (Processing with a mixed gas of saturated hydrocarbon and oxygen)

The contact lens obtained in Manufacturing Example A-1 was placed in a plasma polymerization device (with an internal volume of about 170 L) and a vacuum was drawn to an arrival pressure of 1.27 Pa. Next, a mixed gas was introduced into the device at flow rates of 1 (sccm) of methane and 2 (sccm) of oxygen and processing by plasma polymerization was conducted for 7 minutes at a pressure of 4 Pa, a frequency of 15 kHz, and a discharge power of 35 W. The thickness of a film formed on a silicon wafer processed together with the lens was measured at about 70 Angstroms with an automatic ellipsometer. Subsequent processing and evaluation of the lens after processing were conducted in the same manner as in Example 1. The evaluation results for the lens are given in Table 1. Since the film formed on the lens surface was thin, water wettability following high-pressure steam sterilization was poor, and the lens was unsuitable for use as a contact lens.

### Comparative Example 3 (Processing with a mixed gas of methane and dry air)

The contact lens obtained in Manufacturing Example A-1 was placed in a plasma polymerization device (with an internal volume of about 170 L) and a vacuum was drawn to an arrival pressure of about 1.23 Pa. Next, a mixed gas of methane and air (moisture concentration 0.53 ppm or less) with a mixing ratio (methane:air) of 60:40 (gas flow rate: methane = 1.8 (sccm), air = 1.2 (sccm)) was introduced into the device and processing by plasma polymerization was conducted for 7 minutes at a pressure of 4 Pa, a frequency of 10 kHz, and a discharge power of 35 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 220 Angstroms with an automatic ellipsometer. Subsequent processing and evaluation of the lens after processing were conducted in the same manner as in Example 1. The evaluation results for the lens are given in Table 1. Observation of the lens surface revealed cracks, rendering the lens unsuitable as a contact lens (Fig. 6). It was thought that the film formed with the mixed gas of methane and dry air was formed as a rigid coating on the lens, and the coating was unable to withstand the degree of swelling of the lens in the alcohol extraction and water introduction steps, resulting in cracks. A comparison with Example 1 shows that the processing gas employed in the first step differed, being moist air in the one case and dry air in the other, revealing that the admixing of moisture produced a major difference in the results.

### Comparative Example 4 (Processing with a mixed gas of methane and dry air)

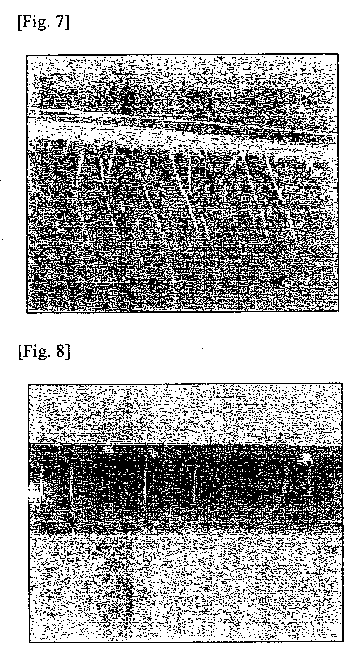

The contact lens obtained in Manufacturing Example A-1 was placed in a plasma polymerization device (with an internal volume of about 170 L) and a vacuum was drawn to an arrival pressure of about 1.25 Pa. Next, a mixed gas of methane and air (moisture concentration of equal to or less than 0.53 ppm) with a mixing ratio (methane:air) of 67:33 (gas flow rate: methane = 2 (sccm), air = 1 (sccm)) was introduced into the device and processing by plasma polymerization was conducted for 6 minutes at a pressure of 4 Pa, a frequency of 10 kHz, and a discharge power of 35 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 150 Angstroms with an automatic ellipsometer. Subsequent processing method of the lens after processing was conducted in the same manner as in Example 1. The evaluation results for the lens are given in Table 1. Observation of the lens surface revealed cracks, rendering the lens unsuitable as a contact lens (Fig. 7). A comparison with Example 1 shows that the processing gas employed in the first step differed, being moist air in the one case and dry air in the other, revealing that admixing of moisture produced in a major difference in the results.

### Comparative Example 5 (Processing with a mixed gas of methane and moist air (moisture concentration 50 ppm)

The contact lens obtained in Manufacturing Example A-1 was placed in a plasma polymerization device (with an internal volume of about 170 L) and a vacuum was drawn to an arrival pressure of about 1.23 Pa. Next, a mixed gas of methane and air (moisture concentration 50 ppm) with a mixing ratio (methane:air) of 60:40 (gas flow rate: methane = 1.8 (sccm), moist air = 1.2 (sccm)) was introduced into the device and processing by plasma polymerization was conducted for 7 minutes at a pressure of 4 Pa, a frequency of 10 kHz, and a discharge power of 35 W. Next, once the processing gas had been discharged from the device, 3 (sccm) of oxygen was introduced into the device and plasma treatment was conducted for 2 minutes at a pressure of 4 Pa, a frequency of 10 kHz, and a discharge power of 40 W. The thickness of a film formed on a silicon wafer processed together with the lens was measured at about 195 Angstroms with an automatic ellipsometer. Subsequent processing and evaluation of the lens after processing were conducted in the same manner as in Example 1. The evaluation results for the lens are given in Table 1. Observation of the lens surface revealed cracks, rendering the lens unsuitable as a contact lens (Fig. 8). A comparison of Comparative Examples 3 and 4, in which processing was conducted with a mixed gas of methane and dry air, revealed substantial improvement in the degree of cracking, but a moisture concentration of 50 ppm was considered inadequate.

As shown in Table 1 and Figs. 5 to 8, when the coating was formed with a hydrocarbon (such as methane) essentially containing no nitrogen or oxygen; when the coating was formed with a mixed gas of methane and dry air; and when the coating was formed with a mixed gas of methane and air containing a moisture content of about 50 ppm, as in Comparative Examples 1, 3 to 5, cracks appeared in the lens surface, rendering the lens unsuitable as a contact lens. When the coating was formed using a mixed gas of a saturated hydrocarbon and oxygen, as in Comparative Example 2, the film formed by the saturated hydrocarbon was etched away by the oxygen plasma, precluding the formation of a film of adequate thickness on the lens surface and imparting insufficient water wettability.
By contrast, as shown in the Examples, lenses that were coated with a mixed gas of methane and moist air had surfaces of good smoothness, water wettability, and durability, and were satisfactory as contact lenses.

**[Table 1]**

| Example | External appearance of lens | Film thickness (Angstroms) | Water wettability (Contact angle (Degree)) | Scrubbing durability (Contact angle (degree)) | | |
|---|---|---|---|---|---|---|
| | | | | 10 times | 20 times | 30 times |
| 1 | Good | 200 | 44 | 45 | 44 | 46 |
| 2 | Good | 170 | 43 | 40 | 38 | 40 |
| 3 | Good | 150 | 45 | 45 | 45 | 45 |
| 4 | Good | 220 | 43 | 45 | 42 | 40 |
| 5 | Good | 190 | 41 | 44 | 44 | 45 |
| 6 | Good | 120 | 44 | 42 | 44 | 45 |
| 7 | Good | 100 | 48 | 47 | 48 | 49 |
| Comp.Ex. | | | | | | |
| 1 | Cracks | 200 | - | - | - | - |
| 2 | Good | 70 | 89 | - | - | - |
| 3 | Cracks | 220 | - | - | - | - |
| 4 | Cracks | 150 | - | - | - | - |
| 5 | Cracks | 195 | - | - | - | - |

### INDUSTRIAL APPLICABILITY

The present invention can provide a soft contact lens, and more particularly, a soft contact lens comprised of a hydrogel that contains silicone as a lens component, having a surface that is smooth and has good water wettability and durability.

### BRIEF DESCRIPTION OF THE DRAWINGS

[Fig. 1] Fig. 1 shows a microscope photograph (175X) of the surface of the lens obtained in Example 1.
[Fig. 2] Fig. 2 shows a microscope photograph (175X) of the surface of the lens obtained in Example 2.
[Fig. 3] Fig. 3 shows a microscope photograph (175X) of the surface of the lens obtained in Example 3.
[Fig. 4] Fig. 4 shows a microscope photograph (175X) of the surface of the lens obtained in Example 5.
[Fig. 5] Fig. 5 shows a microscope photograph (175X) of the surface of the lens obtained in Comparative Example 1.
[Fig. 6] Fig. 6 shows a microscope photograph (175X) of the surface of the lens obtained in Comparative Example 3.
[Fig. 7] Fig. 7 shows a microscope photograph (175X) of the surface of the lens obtained in Comparative Example 4.
[Fig. 8] Fig. 8 shows a microscope photograph (175X) of the surface of the lens obtained in Comparative Example 5.

## Claims

1. A method of manufacturing a contact lens material comprising a contact lens base material and a coating formed on at least a portion of a surface of said base material, wherein
said contact lens base material is processed by plasma polymerization in a mixed gas atmosphere of methane and moist air which comprises equal to or greater than 150 ppm of moisture, and then treated with plasma in a non-polymerizable gas atmosphere to form said coating.

2. The method of manufacturing according to claim 1, wherein said contact lens base material comprises silicone.

3. The method of manufacturing according to claim 1 or 2, wherein the mixing rate of methane and moisture air, methane: moist air, in said mixed gas ranges from 50:50 to 70:30 based on volume.

4. The method of manufacturing according to any of claims 1 to 3, wherein said non-polymerizable gas is at least one selected from the group consisting of oxygen, argon, and air.

5. A method of manufacturing a soft contact lens, wherein
water is introduced into the contact lens material manufactured by the method according to any of claims 1 to 4 to obtain a soft contact lens.

6. The method of manufacturing according to claim 5, which comprises subjecting the contact lens material prior to said water introduction to extraction treatment with an organic solvent.

## Patentansprüche

1. Verfahren zur Herstellung eines Kontaktlinsenmaterials, das ein Kontaktlinsengrundmaterial und eine auf wenigstens einem Teil einer Fläche des Grundmaterials gebildete Beschichtung umfasst, wobei
das Kontaktlinsengrundmaterlal durch Plasmapolymerisation in einer Mischgasatmosphäre aus Methan und feuchter Luft, die wenigstens 150 ppm Wasserdampf umfasst, verarbeitet und dann in einer Atmosphäre aus nichtpolymerisierbarem Gas mit Plasma behandelt wird, wobei die Beschichtung gebildet wird.

2. Herstellungsverfahren gemäß Anspruch 1, wobei das Kontaktlinsengrundmaterial Silikon umfasst.

3. Herstellungsverfahren gemäß Anspruch 1 oder 2, wobei das Mischungsverhältnis von Methan und feuchter Luft, Methan:feuchter Luft, in dem Gasgemisch im Bereich von 50:50 bis 70:30 Volumenteile liegt.

4. Herstellungsverfahren gemäß einem der Ansprüche 1 bis 3, wobei das nichtpolymerisierbare Gas wenigstens eines ist, das aus der Gruppe ausgewählt ist, die aus Sauerstoff, Argon und Luft besteht.

5. Verfahren zur Herstellung einer welchen Kontaktlinse, wobei
Wasser in das Kontaktlinsenmaterial, das nach dem Verfahren gemäß einem der Ansprüche 1 bis 4 hergestellt ist, eingeführt wird, wobei man eine weiche Kontaktlinse erhält.

6. Herstellungsverfahren gemäß Anspruch 5, das die Behandlung des Kontaktlinsenmaterials vor der Einführung des Wassers durch eine Extraktion mit einem organischen Lösungsmittel umfasst.

## Revendications

1. Procédé de fabrication d'un matériau pour lentille de contact comportant un matériau de base de lentille de contact et un revêtement formé sur au moins une partie de la surface dudit matériau de base, dans lequel :
ledit matériau de base de lentille de contact est traité par polymérisation au plasma dans une atmosphère de mélange gazeux de méthane et d'air humide qui comprend une proportion égale ou supérieure à 150 ppm d'humidité et est, ensuite, traité avec un plasma dans une atmosphère de gaz ne provoquant pas de polymérisation afin de former ledit revêtement.

2. Procédé de production selon la revendication 1, dans lequel ledit matériau de base de lentille de contact comporte du silicone.

3. Procédé de production selon la revendication 1 ou 2, dans lequel le taux de mélange de méthane et d'air humide, méthane : air humide, dans ledit mélange gazeux se situe dans la plage de 50:50 à 70:30 sur la base du volume.

4. Procédé de production selon l'une quelconque des revendications 1 à 3, dans lequel ledit gaz ne provoquant pas de polymérisation est au moins une gaz sélectionné à partir du groupe constitué par l'oxygène, l'argon et l'air.

5. Procédé de fabrication d'une lentille de contact souple, dans lequel :
de l'eau est introduite dans le matériau de lentille de contact produit par le procédé selon l'une quelconque des revendications 1 à 4 afin d'obtenir une lentille de contact souple.

6. Procédé de fabrication selon la revendication 5, lequel comprend le fait de soumettre le matériau de lentille de contact, avant ladite introduction de l'eau, à un traitement d'extraction avec un solvant organique.
